# EUROPÄISCHE PATENTSCHRIFT

(11) **EP 1 280 591 B1**
(45) Veröffentlichungstag und Bekanntmachung des Hinweises auf die Patenterteilung: **27.12.2006**
(21) Anmeldenummer: 01933875.5
(22) Anmeldetag: 24.04.2001
(51) Int. Cl.: B01D 1/18, F26B 3/12, C11D 11/02

(54) **VERFAHREN ZUR SPRÜHTROCKNUNG VON LÖSUNGSMITTELHALTIGEN ZUSAMMENSETZUNGEN**
PROCESS FOR SPRAY-DRYING SOLVENT-CONTAINING COMPOSITIONS
PROCEDE DE SECHAGE PAR ATOMISATION DE COMPOSITIONS CONTENANT DES SOLVANTS

(30) Priorität: 03.05.2000 DE 10021539
(43) Veröffentlichungstag der Anmeldung: 05.02.2003
(73) Patentinhaber: Henkel Kommanditgesellschaft auf Aktien, 40589 Düsseldorf (DE)
(72) Erfinder: RÄHSE, Wilfried, 40589 Düsseldorf (DE); DICOI, Ovidiu, 40789 Monheim (DE); WALZEL, Peter, 41539 Dormagen (DE)
(86) Internationale Anmeldenummer: PCT/EP2001/004610
(87) Internationale Veröffentlichungsnummer: WO 2001/083071

(56) Entgegenhaltungen:
- US-A- 3 320 220
- US-A- 3 450 494
- US-A- 5 232 550
- PATENT ABSTRACTS OF JAPAN vol. 004, no. 135 (C-025), 20. September 1980 (1980-09-20) & JP 55 086501 A (TAKASAGO THERMAL ENG CO LTS), 30. Juni 1980 (1980-06-30)

## Beschreibung

Die vorliegende Erfindung betrifft ein Verfahren zur Sprühtrocknung von lösungsmittelhaltigen Zusammensetzungen.

Vorrichtungen zur Sprühtrocknung lösungsmittelhaltiger Zusammensetzungen, insbesondere wasserhaltiger Zusammensetzungen, sind aus dem Stand der Technik bekannt.

Häufig verwendete Vorrichtungen sind beispielsweise Sprühtürme mit Zerstäuberdüsen, die insbesondere bei flüssigen Edukten (Lösungen, Suspensionen oder Schmelzen) zur Bereitstellung eines pulverförmigen Produktes eingesetzt werden. Hierbei wird die Flüssigkeit meist mit Druckdüsen zerstäubt und trocknet dann im Heißgas im Gleich- oder Gegenstrom. Anschließend wird das trockene Produkt durch Zyklone oder Filter abgeschieden. Wird eine Schmelze zerstäubt und im kalten Gas erstarrt, so spricht man von einem Prillturm.

Weitere bekannte Sprühtrockner sind Scheibentürme. Diese sind - wie auch die Düsentürme - Kurzzeittrockner. Sie verwenden zur Zerstäubung rotierende Scheiben und sind im Vergleich zum Düsenturm von gedrungener Bauform. Der Vorteil der Zerstäuberscheibe ist deren Unempfindlichkeit gegen Verstopfung der "Düsen" und stark veränderliche Flüssigkeitsdurchsätze.

Bekannt sind außerdem Sprühtrockner mit integriertem Wirbelbett. Durch den Einbau einer Wirbelschicht am Boden des Sprühturms kann das Produkt dort nachgetrocknet und gesichtet werden. Das Trocknungsgas mit dem Feinstaub wird beispielsweise im oberen Teil des Turmes am Turmkopf abgezogen und der Feinstaub nach der Abtrennung in den Turm zurückgeführt. Deshalb können auch vergleichsweise klebrige und langsam trocknende Edukte verarbeitet werden. Als Produkt werden gut dispergierbare Agglomerate erhalten, die größer und damit zumeist staubärmer als die Pulver der Düsen- und Scheibentürme sind.

Im weiteren Sinne gleichfalls zu den Sprühtrocknern zu zählen sind Wirbelschicht-Sprühgranulatoren ("Agglomerations-Trockner"), die der Herstellung von Granulaten im Bereich von 0.5 mm bis zu mehreren mm aus zerstäubbaren Lösungen, Suspensionen und Schmelzen dienen. Zur Zerstäubung werden Zweistoffdüsen eingesetzt. Das Produkt ist meist abriebfest und hat ein relativ hohes Schüttgewicht. Die Lösegeschwindigkeit ist deshalb, verglichen mit anderen Sprühprodukten, geringer. Ein solcher Granulator kann auch zum Beschichten von Granulaten benutzt werden, dann wird er meist diskontinuierlich betrieben.

Ein wesentliches Einsatzgebiet von Sprühtrocknern ist die Trocknung wäßriger Zubereitungen von Netz-, Wasch- und Reinigungsmitteln zur Herstellung entsprechender Mittel in schütt- und rieselfähiger Pulverform. Die Mittel werden in Düsen- oder Scheibensprühtürmen in der Regel im Bereich des Umgebungsdrucks in Gleichstrom- oder häufiger in der Gegenstromfahrweise großtechnisch gewonnen. Aus der umfangreichen Fachliteratur sei lediglich beispielhaft verwiesen auf K. Masters "Spray Drying Handbook", Longman Scientific & Technical 1991, ISBN 0-582-06266-7.

Aus der WO 92/05849 ist ein Verfahren zur Sprühtrocknung von Wertstoffen und Wertstoffgemischen unter Verwendung von überhitztem Wasserdampf bekannt. Der Einsatz überhitzten Wasserdampfes vermeidet oxidative Schädigungen des Trocknungsgutes.

Aus der WO 96/04973 ist ein Verfahren zur Sprühtrocknung wasserhaltiger Wertstoffzubereitungen aus dem Bereich der Netz-, Wasch- und/oder Reinigungsmittel bekannt, das durch Einbringen eines pulver- oder puderförmigen Hilfsstoffes in den Innenraum der Sprühtrocknungszone Anbackungen an die Innenwand des Trockners vermeidet.

Die US-A-5,723,433 beschreibt ein Verfahren zum Entfernen von Lösungsmitteln aus einer pastösen Tensidmasse, das umfaßt, die pastöse Masse unter Druck in einen Trocknungskanal einzuführen und am Einlaß des Kanals den Druck so abzusenken, daß es zu einer Entspannungsverdampfung (Flash-Verdampfung) bestimmter Komponenten der pastösen Masse kommt. Die pastöse Masse wird in dem Trockungskanal erhitzt und durch die während der Entspannungsverdampfung freiwerdenden Gase durch den Kanal getrieben. Ergebnis des Verfahrens ist eine konzentrierte Tensidpaste, die am Auslaß des Trocknungskanales erhalten wird.

Das Patent US 3,450,494 offenbart ein Verfahren zur Herstellung von Natriumsilikat Partikeln, in welchem eine wässrige Natriumsilikat-Dispersion unter Druck erhitzt in eine Expansionszone, in welcher ein niedrigerer Druck herrscht, eingebracht wird. Die Expansionszone in dem offenbarten Verfahren weist Umgebungstemperatur auf; ein Heiß-oder Trocknungsgas wird in die Expansionszone nicht eingeleitet. Da kein Heiß- oder Trocknungsgas eingesetzt wird, kühlen die gebildeten Partikel schnell ab, was zur Ausbildung einer zerklüfteten Partikel-Struktur führt. Die Verfahrensendprodukte des offenbarten Verfahrens unterscheiden sich grundlegend von Granulaten, welche durch Sprühtrocknungsverfahren hergestellt wurden.

In JP-A-55086501 wird ein Verfahren beschrieben, in welchem ein Slurry unter Druck erhitzt, durch eine Drosselklappe zwecks Absenkung des Drucks geführt und anschließend in einen Trocknungsturm eingesprüht wird. Durch die schnelle Ausdehnung der flüssigen Komponenten und Verdunstung des Wassers werden trockene, feine Partikel gebildet.

Eine Vakuum-Trocknungsmethode, in welcher ein flüssiges Beschickungsgut zuerst in einen Lösungsmitteldampf und anschließend in einen Vakuumraum eingeführt wird, wird in dem Patent US 5,232,550 offenbart. Bereits im Lösungsmitteldampf bilden sich aus dem flüssigem Beschickungsgut sphärische Partikel, die dann in den Vakuumraum gelangen und dort mittels Vakuumverdunstung getrocknet werden.

Die bekannten Verfahren zur Sprühtrocknung flüssiger oder pastöser Zusammensetzungen sind nachteiligerweise durch einen sehr hohen Energieverbrauch gekennzeichnet. Die eingesetzte Energie dient zu einem erheblichen Teil nicht der Lösungsmittelverdampfung, sondern der Deckung von Wärmeverlusten, die beispielsweise durch das warme Abgas entstehen.

Nachteilig ist außerdem, daß bei der Sprühtrocknung von Zusammensetzungen, die anfällig für mikrobielle Kontaminationen sind, die enthaltenenen Mikroorganismen nicht zuverlässig abgetötet werden, da die Zusammensetzungen im Ansetzbehälter des Sprühtrockners meist nur für kurze Zeit und oft lediglich auf eine Temperatur von unter 100 °C erhitzt werden, um die enthaltenen Wertstoffe zu schonen. Auch wenn in einem sehr heißen Gasstrom getrocknet wird, sind die Partikel dem Heißgas nur Sekunden ausgesetzt, was zur Abtötung vieler unerwünschter Mikroorganismen nicht ausreicht. Problematisch ist diese Keimbelastung insbesondere bei der Herstellung von Pulvern oder Granulaten, die in Le-bensmitteln, Kosmetika oder Arzneimitteln Verwendung finden sollen. Erschwerend kommt hinzu, daß viele Mikroorganismen sich in dem getrockneten Produkt in Abwesenheit von Wasser zwar nicht mehr vermehren; aber auch nicht absterben, sondern extrem widerstandsfähige Dauerformen wie beispielsweise Sporen ausbilden.

Das getrocknete Produkt ist folglich weder optisch noch olfaktorisch als kontaminiert zu erkennen; wird es jedoch wieder mit Wasser in Kontakt gebracht, beispielsweise in Wasser gelöst, kann es zu erheblichen Keimbelastungen kommen, wenn das Produkt nicht binnen weniger Stunden verbraucht wird.

Der vorliegenden Erfindung liegt somit die Aufgabe zugrunde, ein Sprühtrocknungsverfahren bereitzustellen, der die obengenannten Nachteile des Standes der Technik vermeidet.

Diese Aufgabe wird erfindungsgemäß gelöst durch ein Verfahren gemäß Anspruch 10. Eine geeignete Vorrichtung zur Sprühtrocknung lösungsmittelhaltiger Zusammensetzungen, umfaßt:
a) eine Zuführung für eine flüssige oder pastöse lösungsmittelhaltige Zusammensetzung,
b) Mittel zum Erhitzen der flüssigen oder pastösen lösungsmittelhaltigen Zusammensetzung auf eine Temperatur, die über dem Siedepunkt des Lösungsmittels liegt,
c) Mittel zum Transport der in b) erhitzten flüssigen oder pastösen lösungsmittelhaltigen Zusammensetzung unter Überdruck und bei einer Temperatur, die über dem Siedepunkt des Lösungsmittels liegt,
d) Mittel zur Zerstäubung der in b) erhitzten und in c) unter Überdruck transportierten flüssigen oder pastösen lösungsmittelhaltigen Zusammensetzung bei einer Temperatur, die über dem Siedepunkt des Lösungsmittels liegt sowie
e) einen nicht unter Überdruck befindlichen Relaxationsraum, der die mittels d) zerstäubte Zusammensetzung aufnimmt.

Vorteilhafterweise ist der Energiebedarf des erfindungsgemäßen Verfahrens bei gleicher Trocknungsleistung geringer als der herkömmlicher Sprühtrockner. Die Energieersparnis liegt in der Regel bei etwa 10 % bis etwa 35 %.

Zudem erfolgt durch den Transport und die Zerstäubung unter Überdruck eine weitgehende Drucksterilisation der zu trocknenden Zusammensetzung, insbesondere wenn die Suspension über 150 °C erhitzt wird.

Bei der unter Überdruck erfolgenden Zerstäubung in den nicht unter Überdruck befindlichen Relaxationsraum kommt es zu einer Entspannungsverdampfung des Lösungsmittels oder zumindest von Teilen des Lösungsmittels.

Bei der Entspannungsverdampfung (Flash-Verdampfung) wird ein flüssiger Stoffstrom auf einen niedrigeren Druck gedrosselt. Dabei verdampft ein Teil der Flüssigkeit, die sich dabei abkühlt, d.h. die für den Verdampfungsvorgang erforderliche Verdampfungsenthalpie wird hierbei der verbleibenden Restflüssigkeit entnommen und nicht von außen zugeführt. Im Detail kann man sich den Entspannungsverdampfungsvorgang so vorstellen, daß sich nach der Druckabsenkung in der Flüssigkeit zunächst eine große Anzahl kleinster Dampfblasen bildet. Diese Dampfblasen wachsen dann soweit an, bis bei ausreichender Verweilzeit im Entspannungsbehälter soviel Dampf gebildet wurde wie gerade dem thermodynamischen Gleichgewicht entspricht.

Der rapide Druckabfall hat eine zusätzliche sterilisierende Wirkung, da er die Zellmembranen und/oder Zellwände noch intakter Mikroorganismen zerreißt und diese dadurch abtötet.

Ein weiterer, überraschender positiver Effekt, der bei der Anwendung des erfindungsgemäßen Verfahrens zu beobachten ist, besteht in der Erhöhung des sogenannten Berger Weissgrades, bei der Trocknung von Wasch-, Netz- oder Reinigungsmitteln um etwa 20 % bis etwa 70 %, meistens um etwa 50%, verglichen mit konventionell sprühgetrockneten Produkten.

Eine flüssige oder pastöse lösungsmittelhaltige Zusammensetzung im Sinne der vorliegenden Erfindung kann jede zweckmäßige Lösung, Dispersion oder Kombination von Lösung und Dispersion eines Feststoffs in dem Lösungsmittel sein.

Als Mittel b) der Vorrichtung kann grundsätzlich jede Wärmequelle eingesetzt werden, die geeignet ist, die flüssige oder pastöse lösungsmittelhaltige Zusammensetzung auf eine Temperatur zu erhitzen, die über dem Siedepunkt des Lösungsmittels liegt. Geeignete Wärmequellen sind beispielsweise Gasbrenner, Heizstrahler oder insbesondere Wärmetauscher.

Die Mittel b) und/oder c) sind vorzugsweise mit einer Mischvorrichtung, insbesondere mit einem üblichen dynamischen oder statischen Mischer, besonders bevorzugt mit einem statischen Mischer, ganz besonders bevorzugt mit einem Doppelmantel-Statikmischer, versehen.

Als Mittel d) der Vorrichtung eignen sich insbesondere Zerstäuberdüsen, beispielsweise Pneumatik-Zerstäuberdüsen, Hohlkegeldüsen, Vollkegeldüsen, Flachstrahldüsen, Vollstrahldüsen oder Ultraschallzerstäuber.

Die in den Mitteln b) bis d) herrschende Temperatur hängt von der Beschaffenheit des Lösungsmittels und der lösungsmittelhaltigen Zusammensetzung ab.

Vorzugsweise ist das Lösungsmittel Wasser. In diesem Fall liegt die Temperatur in den Mitteln b) bis d) über 100 °C, insbesondere im Bereich von 100 °C bis 240 °C, besonders bevorzugt im Bereich von 140 °C bis 160 °C, ganz besonders bevorzugt bei etwa 150 °C.

Der Überdruck in den Mitteln c) und d) ist ebenfalls von der Beschaffenheit des Lösungsmittels und der lösungsmittelhaltigen Zusammensetzung abhängig. Wird Wasser als Lösungsmittel verwendet, beispielsweise bei Wasch- oder Reinigungsmittel-Slurries, liegt der Überdruck im Bereich von etwa 5 bar bis etwa 60 bar, insbesondere etwa 20 bar bis etwa 50 bar, besonders bevorzugt etwa 30 bar bis etwa 40 bar.

Im Relaxationsraum e) herrscht Normaldruck. Bevorzugt sind die Merkmale a) bis e) in einen Sprühturm integriert.

Die die zerstäubte Zusammensetzung wird in einem Strom aus Heißgas, insbesondere in einem Strom aus überhitztem Wasserdampf als Heißgas, geführt, wie in der WO 92/05849 beschrieben, auf die hiermit in vollem Umfang Bezug genommen wird.

Die Anwendung des erfindungsgemäßen Verfahrens liegt auf dem Gebiet der Herstellung von pulverförmigen, lagerbeständig schütt- und rieselfähigen Textilwaschmitteln oder bei der Gewinnung entsprechender Handelsformen von Wertstoffen aus diesem Bereich, wie Tensiden oder tensidhaltigen Mehrkomponentengemischen.

Im nachfolgenden finden sich allgemeine Angaben von Wertstoffen für die unmittelbare oder mittelbare Verwendung bei der Herstellung von Netz-, Wasch- und/oder Reinigungsmitteln, wobei diese Zusammenstellung an heute üblichen Komponenten von Textilwaschmitteln dargestellt ist.

Als anionische Tenside sind zum Beispiel Seifen aus natürlichen oder synthetischen, vorzugsweise gesättigten Fettsäuren brauchbar. Geeignet sind insbesondere aus natürlichen Fettsäuren, zum Beispiel Kokos-, Palmkern- oder Talgfettsäuren, abgeleitete Seifengemische. Bevorzugt sind solche, die zu etwa 50 bis 100% aus gesättigten C₁₂₋₁₈-Fettsäureseifen und zu etwa 0 bis 50 % aus Ölsäureseife zusammengesetzt sind. Weiterhin geeignete synthetische anionische Tenside sind solche vom Typ der Sulfonate und Sulfate. Besondere Bedeutung kann dabei die erfindungsgemäße Vorrichtung für entsprechende Verbindungen pflanzlichen und/oder tierischen Ursprungs haben.

Als Tenside vom Sulfonattyp kommen Alkylbenzolsulfonate (C₉₋₁₅-Alkyl), Olefinsulfonate, d.h. Gemische aus Alken- und Hydroxyalkansulfonaten sowie Sulfonate in Betracht, wie man sie beispielsweise aus C₁₂₋₁₈-Monoolefinen mit end- oder innenständiger Doppelbindung durch Sulfonieren mit gasförmigem Schwefeltrioxid und anschließende alkalische oder saure Hydrolyse der Sulfonierungsprodukte erhält. Geeignet sind auch die Alkansulfonate, die aus C₁₂₋₁₈-Alkanen durch Sulfochlorierung oder Sulfoxidation und anschließende Hydrolyse beziehungsweise Neutralisation beziehungsweise durch Bisulfitaddition an Olefine erhältlich sind, sowie insbesondere die Ester von Alpha-Sulfofettsäuren (Estersulfonate), zum Beispiel die Alpha-sulfonierten Methylester der hydrierten Kokos-, Palmkern- oder Talgfettsäuren.

Wichtige Tensid- beziehungsweise Emulgatorkomponenten sind in diesem Zusammenhang auch die sogenannten Di-salze, die sich durch Verseifung der zuvor genannten Alpha-sulfonierten Fettsäure-Methylester beziehungsweise durch unmittelbare Sulfonierung von insbesondere gesättigten Fettsäuren - insbesondere C₁₂₋₁₈-Fettsäuren - herstellen lassen. Das erfindungsgemäße Verfahren schafft damit die Möglichkeit, großtechnisch problemfrei Tenside der hier und im nachfolgenden beschriebenen Art auf Naturstoffbasis in trokkener rieselfähiger Konzentratform zur Verfügung zu stellen, die praktisch unbegrenzte Lagerbeständigkeit beinhaltet und damit einen wesentlichen Beitrag zum weltweit angestrebten ABS-Austausch leisten zu können.

Geeignete Tenside vom Sulfattyp sind die Schwefelsäuremonoester aus primären Alkoholen natürlichen und synthetischen Ursprungs, das heißt aus Fettalkoholen, zum Beispiel Kokosfettalkoholen, Talgfettalkoholen, Oleylalkohol, Lauryl-, Myristyl-, Palmityl- oder Stearylalkohol, oder den C₁₀₋₂₀-Oxoalkoholen, und diejenigen sekundärer Alkohole dieser Kettenlänge.

Auch die Schwefelsäuremonoester der mit insbesondere 1 bis 6 Mol Ethylenoxid ethoxylierten Alkohole natürlichen und/oder synthetischen Ursprungs sind geeignete Komponenten. Als Beispiel für Synthese-Alkohole seien Verbindungen wie 2-Methyl-verzweigte C₉₋₁₁ -Alkohole mit im Durchschnitt 3,5 Mol Ethylenoxid genannt. Ferner eignen sich sulfatierte Fettsäuremonoglyceride. Die anionischen Tenside können in Form ihrer Natrium-, Kalium- und Ammoniumsalze sowie als lösliche Salze organischer Basen vorliegen.

Als nichtionische Tenside sind Anlagerungsprodukte von 1 bis 40, vorzugsweise 2 bis 20 Mol Ethylenoxid an 1 Mol einer aliphatischen Verbindung mit im wesentlichen 10 bis 20 Kohlenstoffatomen aus der Gruppe der Alkohole, Carbonsäuren, Fettamine, Carbonsäureamide oder Alkansulfonamide verwendbar.

Besonders wichtig sind die Anlagerungsprodukte von 8 bis 20 Mol Ethylenoxid an primäre Alkohole, wie zum Beispiel an Kokos- oder Talgfettalkohole, an Oleylalkohol, an Oxoalkohole, oder an sekundäre Alkohole mit 8 bis 18, vorzugsweise 12 bis 18 C-Atomen. Neben den wasserlöslichen Nonionics sind aber auch nicht beziehungsweise nicht vollständig wasserlösliche Polyglykolether mit 2 bis 7 Ethylenglykolether-Resten im Molekül von Interesse, insbesondere wenn sie zusammen mit wasserlöslichen, nichtionischen oder anionischen Tensiden eingesetzt werden.

Außerdem können als nichtionische Tenside auch Alkyglykoside der allgemeinen Formel R-O-(G)ₓ eingesetzt werden, in der R einen primären geradkettigen oder verzweigten aliphatischen Rest mit 8 bis 22, vorzugsweise 12 bis 18 C-Atomen bedeutet, G ein Symbol ist, das für eine Glykose-Einheit mit 5 oder 6 C-Atomen steht, und der Oligomerisierungsgrad x zwischen 1 und 10 liegt.

Als organische und anorganische Gerüst- beziehungsweise Builder-Substanzen eignen sich schwach sauer, neutral oder alkalisch reagierende lösliche und/oder unlösliche Komponenten, die Calciumionen auszufällen oder komplex zu binden vermögen. Geeignete und insbesondere ökologisch unbedenkliche Builder-Substanzen sind Zeolithe.

Als Zeolith geeignet ist beispielsweise feinkristalliner, synthetischer und gebundenes Wasser enthaltender Zeolith, wie Zeolith A, Zeolith P und Mischungen aus A und P. Als im Handel erhältlicher Zeolith P ist beispielsweise Zeolith MAP^{®} (Handelsprodukt der Firma Crosfield) zu nennen.

Als weitere besonders geeignete Zeolithe sind Zeolithe vom Faujasit-Typ zu nennen. Zusammen mit den Zeolithen X und Y gehört das Mineral Faujasit zu den Faujasit-Typen innerhalb der Zeolith-Strukturgruppe 4, die durch die Doppelsechsring-Untereinheit D6R gekennzeichnet sind (Vergleiche Donald W. Breck: "Zeolite Molecular Sieves", John Wiley & Sons, New York, London, Sydney, Toronto, 1974, Seite 92). Zur Zeolith-Strukturgruppe 4 zählen neben den genannten Faujasit-Typen noch die Mineralien Chabazit und Gmelinit sowie die synthetischen Zeolithe R (Chabazit-Typ), S (Gmelinit-Typ), L und ZK-5. Die beiden letztgenannten synthetischen Zeolithe haben keine mineralischen Analoga.

Zeolithe vom Faujasit-Typ sind aus β-Käfigen aufgebaut, die tetrahedral über D6R-Untereinheiten verknüpft sind, wobei die β-Käfige ähnlich den Kohlenstoffatomen im Diamanten angeordnet sind. Das dreidimensionale Netzwerk der erfindungsgemäß geeigneten Zeolithe vom Faujasit-Typ weist Poren von 2,2 und 7,4 Å auf, die Elementarzelle enthält darüber hinaus 8 Kavitäten mit ca. 13 Å Durchmesser und läßt sich durch die Formel Na₈₆[(AlO₂)₈₆(SiO₂)₁₀₆] · 264 H₂O beschreiben. Das Netzwerk des Zeolith X enthält dabei ein Hohlraumvolumen von ungefähr 50%, bezogen auf den dehydratisierten Kristall, was den größten Leerraum aller bekannten Zeolithe darstellt (Zeolith Y: ca. 48% Hohlraumvolumen, Faujasit: ca. 47% Hohlraumvolumen). (Alle Daten aus: Donald W. Breck: "Zeolite Molecular Sieves", John Wiley & Sons, New York, London, Sydney, Toronto, 1974, Seiten 145, 176, 177).

Im Rahmen der vorliegenden Erfindung kennzeichnet der Begriff "Zeolith vom Faujasit-Typ" alle drei Zeolithe, die die Faujasit-Untergruppe der Zeolith-Strukturgruppe 4 bilden. Neben dem Zeolith X sind erfindungsgemäß also auch Zeolith Y und Faujasit sowie Mischungen dieser Verbindungen geeignet, wobei der reine Zeolith X bevorzugt ist. Auch Mischungen oder Cokristallisate von Zeolithen des Faujasit-Typs mit anderen Zeolithen, die nicht zwingend der Zeolith-Strukturgruppe 4 angehören müssen, sind erfindungsgemäß geeignet, wobei vorzugsweise mindestens 50 Gew.-% der Zeolithe Zeolithe vom Faujasit-Typ sind.

Die geeigneten Aluminiumsilikate sind kommerziell erhältlich, und die Methoden zu ihrer Darstellung sind in Standardmonographien beschrieben.

Beispiele für kommerziell erhältliche Zeolithe vom X-Typ können durch die folgenden Formeln beschrieben werden:

Na₈₆[(AlO₂)₈₆(SiO₂)₁₀₆] · x H₂O,

K₈₆[(AlO₂)₈₆(SiO₂)₁₀₆] · x H₂O,

Ca₄₀Na₆[(AlO₂)₈₆(SiO₂)₁₀₆] · x H₂O,

Sr₂₁Ba₂₂[(AlO₂)₈₆(SiO₂)₁₀₆] · x H₂O,

in denen x Werte zwischen 0 und 276 annehmen kann. Diese Zeolithe weisen Porengrößen von 8,0 bis 8,4 Å auf.

Geeignet ist beispielsweise auch der in der europäischen Patentanmeldung EP-A-816 291 beschriebene Zeolith A-LSX, der einem Co-Kristallisat aus Zeolith X und Zeolith A entspricht und in seiner wasserfreien Form die Formel (M_{2/n}O + M'_{2/n}O)·Al₂O₃·zSiO₂ besitzt, wobei M und M' Alkali- oder Erdalkalimetalle sein können und z eine Zahl zwischen 2,1 und 2,6 ist. Kommerziell erhältlich ist dieses Produkt unter dem Markennamen VEGOBOND AX von der Firma CONDEA Augusta S.p.A.

Auch Zeolithe vom Y-Typ sind kommerziell erhältlich und lassen sich beispielsweise durch die Formeln

Na₅₆[(AlO₂)₅₆(SiO₂)]₁₃₆] · x H₂O,

K₅₆[(AlO₂)₅₆(SiO₂)₁₃₆] · x H₂O,

in denen x für Zahlen zwischen 0 und 276 steht, beschreiben. Diese Zeolithe weisen Porengrößen von 8,0 Å auf.

Die Teilchengrößen der geeigneten Zeolithe vom Faujasit-Typ liegt dabei im Bereich von 0,1 bis zu 100 µm, vorzugsweise zwischen 0,5 und 50 µm und insbesondere zwischen 1 und 30 µm, jeweils mit Standard-Teilchengrößenbestimmungsmethoden gemessen.

Als weitere Builder-Bestandteile, die insbesondere zusamen mit den Zeolithen eingesetzt werden können, kommen (co-)polymere Polycarboxylate in Betracht, wie Polyacrylate, Polymethacrylate und insbesondere Copolymere der Acrylsäure mit Maleinsäure, vorzugsweise solche mit 50 % bis 10 % Maleinsäure. Das Molekulargewicht der Homopolymeren liegt im allgemeinen zwischen 1.000 und 100.000, das der Copolymeren zwischen 2.000 und 200.000, vorzugsweise 50.000 bis 120.000, bezogen auf freie Säure. Ein besonders bevorzugtes Acrylsäure-Maleinsäure-Copolymer weist ein Molekulargewicht von 50.000 bis 100.000 auf.

Geeignete weitere Verbindungen dieser Klasse sind Copolymere der Acrylsäure oder Methacrylsäure mit Vinylethern, wie Vinylmethylether, in denen der Anteil der Säure mindestens 50% beträgt. Brauchbar sind ferner Polyacetalcarbonsäuren, wie sie beispielsweise in den US-Patentschriften 4,144,226 und 4,146,495 beschrieben sind sowie polymere Säuren, die durch Polymerisation von Acrolein und anschließende Disproportionierung mittels Alkalien erhalten werden und aus Acrylsäureeinheiten und Vinylalkoholeinheiten beziehungsweise Acroleineinheiten aufgebaut sind.

Brauchbare organische Gerüstsubstanzen sind beispielsweise die bevorzugt in Form ihrer Natriumsalze eingesetzten Polycarbonsäuren, wie Citronensäure und Nitrilotriacetat (NTA), sofern ein derartiger Einsatz aus ökologischen Gründen nicht zu beanstanden ist.
In Fällen, in denen ein Phosphat-Gehalt toleriert wird, können auch Phosphate mitverwendet werden, insbesondere Pentanatriumtriphosphat, gegebenenfalls auch Pyrophosphate sowie Orthophosphate, die in erster Linie als Fällungsmittel für Kalksalze wirken.

Geeignete anorganische, nicht komplexbildende Salze sind die auch als "Waschalkalien" bezeichneten Bicarbonate, Carbonate, Borate oder Silikate der Alkalien; von den Alkalisilikaten sind vor allem die Natriumsilikate mit einem Verhältnis Na₂O : SiO₂ wie 1 : 1 bis 1:3,5 brauchbar.

Aus den restlichen Gruppen üblicher Waschmittelbestandteile kommen zur Mitverwendung bei der Sprühtrocknung mittels der erfindungsgemäßen Vorrichtung insbesondere Komponenten aus den Klassen der Vergrauungsinhibitoren (Schmutzträger), der Neutralsalze und der textilweichmachenden Hilfsmittel in Betracht.

Geeignete Vergrauungsinhibitoren sind beispielsweise Carboxymethylcellulose, Methylhydroxyethylcellulose und deren Gemische.

Als typisches Beispiel für einen geeigneten Vertreter der Neutralsalze ist das bereits erwähnte Natriumsulfat zu nennen.

Geeignete Weichmacher sind beispielsweise quellfähige Schichtsilikate von der Art entsprechender Montmorillonite, beispielsweise Bentonit.

Hochtemperatur-sensitive übliche Mischungsbestandteile von Wasch- und Reinigungsmitteln, wie Bleichmittel auf Basis von Per-Verbindungen, Enzyme aus der Klasse Proteasen, Lipasen und Amylasen; beziehungsweise Bakterienstämme oder Pilze, Stabilisatoren, Parfüme, temperaturempfindliche Farbstoffe und dergleichen, werden zweckmäßigerweise mit den zuvor getrockneten Zusammensetzungen vermischt.

## Patentansprüche

1. Verfahren zur Herstellung von pulverförmigen oder granulären Wasch-, Netz- oder Reinigungsmitteln bzw. von Rohstoffen für Wasch-, Netz- oder Reinigungsmittel durch Sprühtrocknung von lösungsmittelhaltigen, tensidhaltigen Mehrkomponentengemischen, wobei man
a) ein flüssiges oder pastöses lösungsmittelhaltiges, tensidhaltiges Mehrkomponentengemisch auf eine Temperatur erhitzt, die über dem Siedepunkt des Lösungsmittels liegt,
b) das erhitzte flüssige oder pastöse lösungsmittelhaltige, tensidhaltige Mehrkomponentengemisch unter Überdruck und bei einer Temperatur, die über dem Siedepunkt des Lösungsmittels liegt, einer Zerstäubungsvorrichtung zuführt und
c) das erhitzte flüssige oder pastöse lösungsmittelhaltige, tensidhaltige Mehrkomponentengemisch unter Überdruck und bei einer Temperatur, die über dem Siedepunkt des Lösungsmittels liegt, mittels der Zerstäubungsvorrichtung in einen Relaxationsraum in welchem Normaldruck herrscht, zerstaubt, wobei die zerstäubte Zusammensetzung in einem Strom aus Heißgas geführt wird.

2. Verfahren nach Anspruch 1, **dadurch gekennzeichnet, daß** das zu entfernende Lösungsmittel Wasser ist.

3. Verfahren nach Anspruch 1 oder 2, **dadurch gekennzeichnet, daß** das zerstäubte Mehrkomponentengemisch in einem Strom aus überhitztem Wasserdampf geführt wird.

## Claims

1. A process for the production of powder-form or granular laundry detergents, wetting agents or cleaners or of raw materials for laundry detergents, wetting agents or cleaners by spray drying of solvent- and surfactant-containing multicomponent mixtures,
a) a liquid or paste-form solvent- and surfactant-containing multicomponent mixture being heated to a temperature above the boiling point of the solvent,
b) the heated liquid or paste-form solvent- and surfactant-containing multicomponent mixture being delivered to an atomizer under excess pressure and at a temperature above the boiling point of the solvent and
c) the heated liquid or paste-form solvent- and surfactant-containing multicomponent mixture being sprayed by the atomizer into a relaxation space where normal pressure prevails under excess pressure and at a temperature above the boiling point of the solvent, the sprayed composition being carried in a stream of hot gas.

2. A process as claimed in claim 1, **characterized in that** the solvent to be removed is water.

3. A process as claimed in claim 1 or 2, **characterized in that** the sprayed multicomponent mixture is carried in a stream of superheated steam.

## Revendications

1. Procédé de préparation d'agents de lavage, mouillants ou de nettoyage ou de matières premières pour des agents de lavage, mouillants ou de nettoyage, sous forme de poudre ou de granules, par séchage par pulvérisation de mélanges à plusieurs composants contenant au moins un solvant, contenant au moins un agent tensioactif, dans lequel
a) on chauffe un mélange à plusieurs composants, liquide ou pâteux, contenant au moins un solvant, contenant au moins un agent tensioactif à une température qui est supérieure au point d'ébullition du solvant,
b) on introduit le mélange à plusieurs composants, liquide ou pâteux, contenant au moins un solvant, contenant au moins un agent tensioactif chauffé avec une surpression et à une température qui est supérieure au point d'ébullition du solvant, dans un dispositif de pulvérisation et
c) on pulvérise le mélange à plusieurs composants, liquide ou pâteux, contenant au moins un solvant, contenant au moins un agent tensioactif chauffé avec une surpression et à une température qui est supérieure au point d'ébullition du solvant, au moyen du dispositif de pulvérisation dans une chambre de relaxation dans laquelle règne une pression normale, la composition pulvérisée étant guidée dans un flux de gaz chaud.

2. Procédé selon la revendication 1, **caractérisé en ce que** le solvant à éliminer est de l'eau.

3. Procédé selon la revendication 1 ou 2, **caractérisé en ce que** le mélange à plusieurs composants est guidé dans un flux de vapeur d'eau surchauffée.
